# EUROPEAN PATENT APPLICATION

(11) **EP 2 477 261 A2**
(43) Date of publication of application: **18.07.2012**
(21) Application number: 11181887.8
(22) Date of filing: 19.09.2011
(51) Int. Cl.: H01M 4/62, H01M 4/04, H01M 10/052, H01M 4/13, H01M 4/139

(54) **Negative active material composition, method of preparing negative electrode plate by using negative active material composition, and lithium secondary battery manufactured by using the negative active material composition**

(30) Priority: 12.01.2011 US 432156 P; 16.05.2011 US 108819
(71) Applicant: Samsung SDI Co., Ltd., Gyeonggi-do (KR)
(72) Inventor: Son, Dong-Ho, Gyeonggi-do (KR); Kim, Ki-Jun, Gyeonggi-do (KR); Kim, Ihn, Gyeonggi-do (KR); Kim, Young-Su, Gyeonggi-do (KR); Park, Sam-Jin, Gyeonggi-do (KR); Seo, Na-Ri, Gyeonggi-do (KR); Kim, Myoung-Sun, Gyeonggi-do (KR)
(74) Representative: Taor, Simon Edward William

(57) **Abstract**

A negative active material composition including a negative active material, a binder, and a solvent, in which the solvent includes an aqueous solvent and an organic solvent, and a method of preparing a negative electrode plate by using the negative active material composition. A lithium battery manufactured by using the negative active material composition has good lifetime characteristics due to formation of pores in an electrode plate.

## Description

The present invention relates to a negative active material composition, a method of preparing a negative electrode plate by using the negative active material composition, and a lithium secondary battery manufactured by using the negative active material composition.

The recent technology development of and increasing demand for mobile devices have lead to high demand for secondary batteries as an energy source. Among secondary batteries, lithium secondary batteries having high energy density and high voltage are commercially available and widely used.

In general, a lithium secondary battery includes a lithium transition metal oxide as a positive active material and a lithium metal, a carbonaceous material, a silicon-based material, or a tin-based material as a negative active material.

A carbonaceous material was first introduced by Japanese Sony Energy Tec Inc. in the early 1990s, and thereafter, often used as a negative active material for a lithium secondary battery. Currently, a capacity of 350 mAh/g, which is a theoretical capacity of a carbonaceous material, is being embodied.

Recently, much research on a silicon-based negative active material is being performed since silicon, or an alloy of silicon, cobalt, nickel, or iron may allow a great amount of lithium to reversibly intercalate and deintercalate through a compound formation reaction with lithium. Also, a silicon-based negative active material has a theoretical maximum capacity of about 4,200 mAh/g, which is ten times greater than that of a carbonaceous material. Thus, a silicon-based negative active material can be a high-capacity negative electrode material that can be used as an alternative to a carbonaceous material.

Meanwhile, a tin-based negative active material has a theoretical electric capacity of 990 mAh/g, which is 2.7 times greater than that of graphite in a graphite electrode. Thus, a tin-based negative active material is also used as an alternative to graphite in a graphite electrode, together with a silicon-based active material.

However, during charging and discharging, a silicon-based negative active material and a tin-based negative active material undergo a volumetric change as high as 200 to 300 times when they react with lithium. Due to such a large volumetric change, if charging and discharging continues, the negative active materials are separated from a current collector, or an electrical contact may be lost due to pulverization of negative active material particles. Also, since the negative active materials have an irreversible discharge capacity of about 50% of the initial capacity, if charging and discharging continues, a capacity rapidly decreases and a cycle lifetime is reduced.

Accordingly, there is a need to develop a negative active material composition for preventing an interior stress from occurring during volumetric expansion in order to prevent separation from a current collector resulting from a volumetric change during charging and discharging, and a negative electrode plate and a lithium secondary battery prepared using the negative active material composition.

One or more embodiments of the present invention include a negative active material composition for preventing an interior stress occurring during volumetric expansion by forming pores in an electrode plate.

One or more embodiments of the present invention include a method of preparing a negative electrode plate by using the negative active material composition.

One or more embodiments of the present invention include a lithium secondary battery having good lifetime characteristics manufactured by using the negative active material composition.

According to an aspect of the present invention, there is provided a negative active material composition including a negative active material, a binder, and a solvent, in which the solvent may include an aqueous solvent and an organic solvent.

According to another aspect of the present invention, there is provided a method of preparing a negative electrode plate, in which the method includes mixing a negative active material, a binder, and a solvent to prepare a negative active material composition; coating the negative active material composition on an electrode support; drying the negative active material composition to form a dried film; and after the dried film is formed, pressing the resultant structure to form a negative electrode plate including a negative active material layer, in which the solvent includes an aqueous solvent and an organic solvent

According to another aspect of the present invention, there is provided a lithium secondary battery including a negative electrode including a current collector and a negative active material layer formed on the current collector, a positive electrode, and an electrolytic solution, in which a mixed density of the negative active material layer is in a range of 1.0 g/cc to 1.5 g/cc.

The negative active material layer may have a BET specific surface area of 0.03 m²/g to 0.60 m²/g.

The negative electrode may be manufactured by using a negative active material composition.

According to an aspect of the invention, there is provided a negative active material composition for a rechargeable lithium battery as set out in claim 1. Preferred features of this aspect are set out in claims 2 to 9.

According to another aspect of the invention, there is provided a method of preparing a negative electrode plate as set out in claim 10. Preferred features of this aspect are set out in claims 11 to 14.

According to another aspect of the invention, there is provided a rechargeable lithium battery as set out in claim 15.

A negative active material composition and a method of preparing a negative electrode plate by using the negative active material composition according to embodiments of the present invention enable formation of pores in an electrode plate so as to prevent an interior stress occurring during volumetric expansion. Thus, a lithium secondary battery manufactured by using the negative active material composition may have good lifetime characteristics.

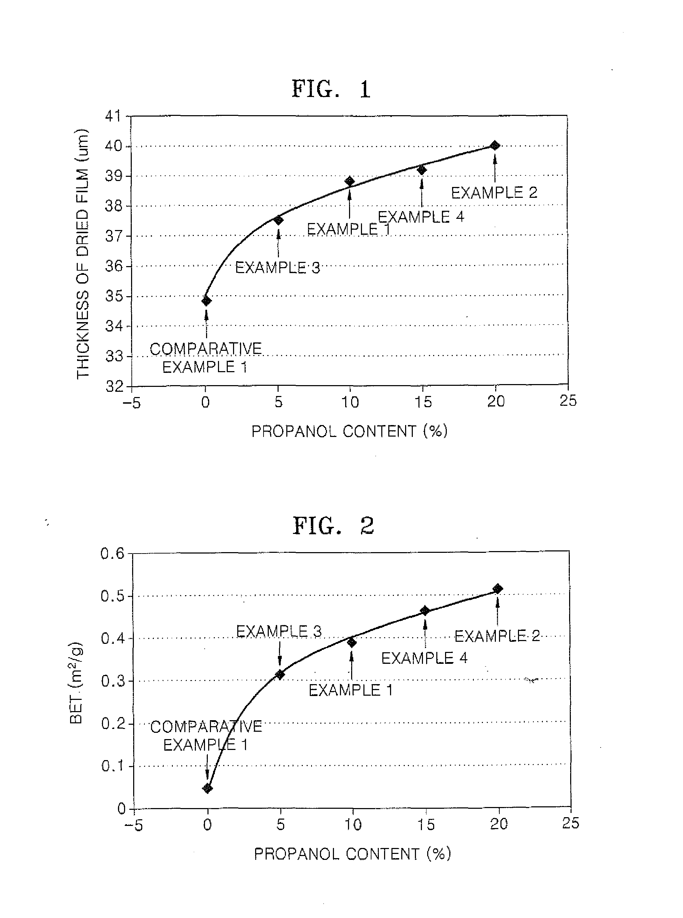

FIG. 1 is a graph of a thickness of a dried film formed according to Examples 1 to 4 and Comparative Example 1.
FIG. 2 is a graph of BET of negative active material layers of anode plates prepared according to Examples 1 to 4 and Comparative Example 1.
FIG. 3 is a graph showing lifetime characteristics of half cells including anode plates prepared according to Examples 1 to 4 and Comparative Example 1.

Hereinafter, a negative active material composition, a method of preparing a negative electrode plate by using the negative active material composition, and a lithium secondary battery manufactured by using the negative active material composition, according to embodiments of the present invention, will be described in detail. The present invention is defined only by the scope of the claims, which will be described later.

A negative active material composition according to an embodiment of the present invention includes a negative active material, a binder, and a solvent, in which the solvent may include an aqueous solvent and an organic solvent. The term "aqueous solvent" used herein refers to a solvent that includes water, and the term "organic solvent" used herein refers to a solvent that does not include water. In other words, the negative active material composition may comprise a solvent, wherein the solvent comprises water and an organic solvent.

The organic solvent may be methanol, ethanol, propanol, isopropanol, acetone, dimethylformamide, dimethylacetamide, chloroform, dichloromethane, trichloroethylene, normalhexane, or a mixture thereof. For example, the organic solvent may be methanol, ethanol, propanol, isopropanol, or acetone. For example, the organic solvent may be propanol.

The binder may be soluble in water. The organic solvent may be is miscible with water , and the binder may soluble in the organic solvent, so that the negative active material composition is easily prepared. For example, if the organic solvent is propanol, since a boiling point of propanol is 97°C, which is close to 100°C that is a boiling point of the aqueous solvent, the organic solvent is highly miscible with respect to the aqueous solvent and is easily mixed with the aqueous solvent. Thus, the negative active material composition can be more easily formed.

The solvent containing water and an organic solvent may prevent an interior stress occurring during volumetric expansion of the negative active material during charging and discharging by forming pores in an electrode plate. Also, a porosity of an electrode plate may vary according to an amount of the organic solvent in the negative active material composition. In addition, a porosity of an electrode plate is dependent upon solubility of the binder with respect to the aqueous solvent and the organic solvent and volatility of the aqueous solvent and the organic solvent.

An amount of the negative active material may be in a range of 30 to 70 wt%, for example, 45 to 55 wt%, based on the total weight of the negative active material composition. An amount of the binder may be in a range of 2 to 30 wt% based on the total weight of the negative active material composition.

If the amounts of the negative active material and the binder are within the ranges described above, an electrode plate prepared using the negative active material has good lifetime characteristics, high electrode plate binding strength, and high flexibility, and a battery manufactured using the negative active material has high-capacity characteristics.

An amount of the solvent may be in a range of 30 to 70 wt%, for example 35 to 50 wt%, based on the total weight of the negative active material composition.

If the amount of the solvent is within the ranges described above, the solvent enables the negative active material composition to be appropriate for coating and to maintain an appropriate viscosity so as to prepare a negative active material composition having good conservation characteristics.

Also, a mixed weight ratio of the aqueous solvent to the organic solvent may be in a range of, for example, 9:1 to 1:9. For example, the mixed weight ratio of the aqueous solvent to the organic solvent may be in a range of 5:1 to 3:2. For example, the mixed weight ratio of the aqueous solvent to the organic solvent may be in a range of 4:1 to 3:2.

The mixed weight ratio of the aqueous solvent to the organic solvent may vary according to compatibility among the aqueous solvent, the organic solvent, and the binder. For example, if the mixed weight ratio of the aqueous solvent to the organic solvent is within the ranges described above, the binder may easily dissolve in the aqueous solvent and the organic solvent and the electrode plate has a high porosity and thus, a performance of a battery, for example, lifetime characteristics of a battery may be improved.

The negative active material may include at least one material selected from the group consisting of a lithium metal, a metal material that is alloyable with lithium, a material that dopes and undopes lithium, a material that reversibly reacts with lithium to form a lithium-containing compound, a transition metal oxide, a carbonaceous material, and a composite material including the metal material and a carbonaceous material.

For example, the metal material that is alloyable with lithium may be Al, Si, Sn, Pb, Zn, Bi, In, Mg, Ga, Cd, Ag, Ge, K, Na, Ca, Sr, Ba, Sb, Zn, or Ti, but is not limited thereto, and may be any one of various materials that are used in the art.

Examples of a material that dopes and undopes lithium, a material that reversibly reacts with lithium to form a lithium-containing compound, and a transition metal oxide include a tin oxide, a vanadium oxide, a lithium vanadium oxide, a titianium nitrate, Si, SiOₓ(0 < x < 1), Sn, and a Sn alloy composite. Examples of a material that dopes and undopes lithium, a material that reversibly reacts with lithium to form a lithium-containing compound, and a transition metal oxide include a tin oxide, Si, SiOₓ(0 < x < 1), Sn, and a Sn alloy composite. Examples of a material that dopes and undopes lithium, a material that reversibly reacts with lithium to form a lithium-containing compound, and a transition metal oxide include SiOₓ(0 < x < 1). However, a material that dopes and undopes lithium, a material that reversibly reacts with lithium to form a lithium-containing compound, and a transition metal oxide are not limited thereto and may be any one of various materials that are used in the art.

For example, the carbonaceous material may be amorphous carbon or crystalline carbon. Examples of amorphous carbon are soft carbon (low-temperature calcined carbon), hard carbon, meso-phase pitch carbide, calcined coke. Examples of crystalline carbon are natural graphite and artificial graphite, each of which has an amorphous shape, a plate shape, a flake shape, a spherical shape, or a fiber shape. However, the carbonaceous material is not limited thereto and may be any one of various materials that are used in the art.

The binder may allow negative active material particles to be attached to each other and the negative active material to be attached to a current collector. The binder may be water soluble. The binder may include at least one selected from the group consisting of carboxymethylcellulose (CMC), styrene-butadiene rubber (SBR), polyacrylicacid (PAA), polyvinylalcohol(PVA), hydroxypropylenecellulose, diacetylenecellulose.. For example, the binder may be carboxymethylcellulose (CMC), styrene-butadiene rubber (SBR), polyacrylicacid (PAA), or polyvinylalcohol (PVA). For example, the binder may be polyacrylicacid (PAA). However, the binder is not limited thereto and may be any one of various materials that are soluble with respect to the aqueous solvent and the organic solvent.

Alternatively, the binder may be non-water soluble such as at least one selected from the group consisting of polyvinylchloride, polyvinylpyrrolidone, polytetrafluoroethylene, polyvinyllidene fluoride, polyethylene, and polypropylene.

Also, the negative active material composition may further include a conductive agent. A conductive agent provides conductivity to an electrode and may be any one of various materials that do not cause any chemical change in an electrode to be formed. The conductive agent may include at least one selected from the group consisting of carbon black, ketjen black, acetylene black, artificial graphite, natural graphite, copper powder, nickel powder, aluminum powder, silver powder, and polyphenylene, but is not limited thereto. An amount of the conductive agent may be, for example, in a range of 1 to 3 wt%, but is not limited thereto, and may be at the same level as used in a conventional lithium secondary battery.

A method of preparing a negative electrode plate according to an embodiment of the present invention includes mixing a negative active material, a binder, and a solvent to prepare a negative active material composition; coating the negative active material composition on an electrode support; drying the negative active material composition to form a dried film; and after the dried film is formed, pressing the resultant structure to form a negative electrode plate including a negative active material layer, in which the solvent includes water (an aqueous solvent) and an organic solvent.

The negative active material composition further includes a conductive agent.

The negative active material, the binder, and the conductive agent are the same as described above, and thus will not be described herein.

In the coating of the negative active material composition on the electrode support, the electrode support may be used as a current collector, and the coating may be spray coating or doctor blade coating, but is not limited thereto, and may be any one of various coating methods that are used in the art.

In the forming of the dried film by drying the negative active material composition, a thickness of the dried film may be in a range of 30 µm to 40 µm. For example, a thickness of the dried film may be in a range of 32 µm to 40 µm. For example, a thickness of the dried film may be in a range of 34 µm to 40 µm.

The drying temperature may be in a range of 80°C to 130°C. For example, the drying temperature may be in a range of 100°C to 130°C. For example, the drying temperature may be in a range of 110°C to 130°C. The drying time may be in a range of 5 minutes to 30 minutes. For example, the drying time may be in a range of 5 minutes to 15 minutes.

Besides different solubilities with respect to the binder, the aqueous solvent and the organic solvent have different vapor pressures. For example, during the drying, the organic solvent evaporates prior to the aqueous solvent, thereby forming pores, which are empty spaces, in the electrode plate. The dried film having the thickness ranges described above may be formed by controlling the amount of the organic solvent used.

In the pressing the resultant structure to form the negative electrode plate including the negative active material layer after the dried film is formed, a mixed density of the negative active material layer may be, for example, in a range of 1.10g/cc to 1.30g/cc. For example, a mixed density of the negative active material layer may be in a range of 1.10 g/cc to 1.20 g/cc.

For example, if the mixed density of the negative active material layer is 1.13 g/cc, the negative active material layer may have a BET specific surface area of 0.03 m²/g to 0.60 m²/g, for example, 0.04 m²/g to 0.60 m²/g, for example, 0.04 m²/g to 0.55 m²/g.

If the BET specific surface area is within the ranges described above, the negative electrode plate has pores and thus, a stress of the negative electrode plate applied due to a volumetric expansion of the negative active material during charging and discharging may be prevented and lifetime characteristics of a battery may be improved.

A lithium secondary battery according to an embodiment of the present invention includes a negative electrode including a current collector and a negative active material layer formed on the current collector, a positive electrode, and an electrolytic solution, in which a mixed density of the negative active material layer is in a range of 1.0 g/cc to 1.5 g/cc.

For example, a mixed density of the negative active material layer is in a range of 1.10 g/cc to 1.30 g/cc. For example, a mixed density of the negative active material layer is in a range of 1.10 g/cc to 1.20 g/cc.

The negative electrode includes the current collector and the negative active material layer formed on the current collector, in which when the negative active material layer has a mixed density of, for example, 1.13 g/cc, and a BET specific surface area of 0.03 m²/g to 0.60 m²/g, for example 0.04 m²/g to 0.60 m²/g, for example, 0.04 m²/g to 0.55 m²/g.

If the BET specific surface area of the negative active material layer is within the ranges described above, an electrode plate having high-rate characteristics and a high porosity is formed and thus, a lithium secondary battery having good lifetime characteristics obtained by preventing a stress applied to an electrode plate resulting from a volumetric expansion of the negative active material during charging and discharging may be provided.

The current collector may be formed of Al, Cu, etc., but a material for forming a current collector may not be limited thereto. Also, the negative electrode may be manufactured by using the negative active material composition.

The positive electrode may include a current collector and a positive active material layer.

The current collector for the positive electrode may be formed of Al, and a material for forming the current collector for the positive electrode is not limited thereto.

The positive active material layer may include a positive active material, a binder, and selectively, a conductive agent.

The positive active material may include a compound that enables lithium to reversibly intercalate and deintercalate the lithiated intercalation compound. Examples of the compound are compounds represented by:
LiₐA_{1-b}X_{b}D₂ where 0.95 ≤ a ≤ 1.1, and 0 ≤ b ≤ 0.5; LiₐE_{1-b}X_{b}O_{2-c}D_{c} where 0.95 ≤ a ≤ 1.1, 0 ≤ b ≤ 0.5, and 0 ≤ c ≤ 0.05; LiE_{2-b}X_{b}O_{4-c}D_{c} where 0 ≤ b ≤ 0.5, and 0 ≤ c ≤ 0.05; LiₐNi_{1-b-c}Co_{b}B_{c}D_{α} where 0.95 ≤ a ≤1.1, 0 ≤ b ≤ 0.5, 0 ≤ c ≤ 0.05, and 0 < α ≤ 2; LiₐNi_{1-b-c}Co_{b}X_{c}O₂₋ₐM_{α} where 0.95 ≤ a ≤ 1.1, 0 ≤ b ≤ 0.5, 0 ≤ c ≤ 0.05, and 0 < α < 2; LiₐNi_{1-b-c}C_{Ob}X_{c}O_{2-α}M₂ where 0.95 ≤ a ≤ 1.1, 0 ≤ b ≤ 0.5, 0 ≤ c ≤ 0.05, and 0 < α < 2; LiₐNi_{1-b-c}Mn_{b}X_{c}D_{α} where 0.95 ≤ a ≤ 1.1, 0 ≤ b ≤ 0.5, 0 ≤ c ≤ 0.05, and 0 < α ≤S 2; LiₐNi_{1-b-c}Mn_{b}X_{c}O_{2-α}M_{α} where 0.95 ≤ a ≤ 1.1, 0 ≤ b ≤ 0.5, 0 ≤ c ≤ 0.05, and 0 < α < 2; LiₐNi_{1-b-c}Mn_{b}X_{c}O_{2-α}M₂ where 0.95 ≤ a ≤ 1.1, 0 ≤ b ≤ 0.5, 0 ≤ c ≤ 0.05, and 0 < α < 2; LiₐNi_{b}E_{c}G_{d}O₂ where 0.90 ≤ a ≤ 1.1, 0 ≤ b ≤ 0.9, 0 ≤ c ≤ 0.5, and 0.001 ≤ d ≤ 0.1; LiₐNi_{b}Co_{c}Mn_{d}GeO₂ where 0.90 ≤ a ≤ 1.1, 0 ≤ b ≤ 0.9, 0 ≤ c ≤ 0.5, 0 ≤ d ≤0.5, and 0 ≤ e ≤ 0.1; LiₐNiG_{b}O₂ where 0.90 ≤ a ≤ 1.1, and 0.001 ≤ b ≤ 0.1; LiₐCoG_{b}O₂ where 0.90 ≤ a ≤ 1.1, and 0.001 ≤ b ≤ 0.1; LiₐMnG_{b}O₂ where 0.90 ≤ a ≤ 1.1, and 0.001 ≤ b ≤ 0.1; LiₐMn₂G_{b}O₄ where 0.90 ≤ a ≤ 1.1, and 0 ≤ b ≤ 0.1; QO₂; QS₂; LiQS₂; V₂O₅; LiV₂O₅; LiZO₂; LiNiVO₄; Li_{(3-f)}J₂(PO₄)3(0 ≤ f ≤ 2); Li_{(3-f)}Fe₂(PO₄)₃(0 ≤ f ≤ 2); LiFePO₄; and lithium titanate. Examples of the positive active material are LiMn₂O₄, LiNi₂O₄, LiCoO₂, LiNiO₂, LiMnO₂, Li₂MnO₃, LiFePO₄, and LiNiₓCo_{y}O₂ (0<x≤0.15, and 0<y0.85).

In the formulas above, A is one selected from the group consisting of Ni, Co, Mn, and a combination thereof; X is one selected from the group consisting of Al, Ni, Co, Mn, Cr, Fe, Mg, Sr, V, a rare-earth element, and a combination thereof but is not limited thereto; D is one selected from the group consisting of O, F, S, P, and a combination thereof but is not limited thereto; E is one selected from the group consisting of Co, Mn, and a combination thereof but is not limited thereto; M is one selected from the group consisting of F, S, P, and a combination thereof but is not limited thereto; G is one selected from the group consisting of Al, Cr, Mn, Fe, Mg, La, Ce, Sr, V, and a combination thereof but is not limited thereto; Q is one selected from the group consisting of Ti, Mo, Mn, and a combination thereof but is not limited thereto; Z is one selected from the group consisting of Cr, V, Fe, Sc, Y, and a combination thereof but is not limited thereto; and J is one selected from the group consisting of V, Cr, Mn, Co, Ni, Cu, and a combination thereof but is not limited thereto.

The binder may allow positive active material particles to be attached to each other and the positive active material to be attached to the current collector. Examples of the binder are polyvinylalcohol, carboxymethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinyllidene fluoride, polyethylene, polypropylene, styrene-butadiene rubber, acrylated styrene-butadiene rubber, an epoxy resin, and nylon. However, the binder is not limited thereto.

The conductive agent may provide conductivity to the positive electrode, and may be any one of various materials that do not cause any chemical change in the positive electrode and are electronically conductive. Examples of the conductive agent are natural graphite, artificial graphite, carbon black, acetylene black, ketjen black, carbon fiber, and metal powder or fiber of copper, nickel, aluminum, or silver. Also, the conductive agent may also be at least one polyphenylene derivative.

Amounts of the positive active material, the binder, and the conductive agent may be used at the same levels as conventionally used in a lithium secondary battery. For example a weight ratio of the positive active material to the sum of the conductive agent and the binder may be in a range of 98:2 to 92:8, and a mixed ratio of the conductive agent to the binder may be in a range of 1: 1.5 to 3. However, the ratios may not be limited thereto.

In order to form the positive active material layer, a positive active material and a binder (and selectively, a conductive agent) may be mixed in a solvent to prepare a composition for forming a positive active material layer, and then the composition is coated on a current collector. This positive electrode manufacturing method is obvious in the art and thus, will not be described in detail herein.

The solvent may be dimethyl chain carbonate, such as carbonate, ethylmethyl carbonate diethyl carbonate, dipropyl carbonate, a cyclic carbonate, such as dimethoxyethane, diethoxyethane, a fatty acid ester derivative, ethylene carbonate, propylene carbonate, or butylene carbonate, γ-butyrolactone, N-methylpyrrolidone, acetone, or water, and may not be limited thereto.

The composition for forming the positive active material layer and the composition for forming the negative active material layer may further include a plasticizer to form pores in the negative active material layer.

The electrolytic solution may include a non-aqueous organic solvent and a lithium salt.

The non-aqueous organic solvent may act as a medium through which ions participating in an electrochemical reaction of a battery migrate.

Examples of a non-aqueous organic solvent are a carbonate-based solvent, an ester-based solvent, an ether-based solvent, a ketone-based solvent, an alcohol-based solvent, and a non-protonic solvent. Examples of a carbonate-based solvent are dimethyl carbonate(DMC), diethyl carbonate(DEC), dipropyl carbonate(DPC), methylpropyl carbonate(MPC), ethylpropyl carbonate(EPC), ethylmethyl carbonate(EMC), ethylene carbonate(EC), propylene carbonate(PC), butylene carbonate(BC), and ethylmethyl carbonate(EMC). Examples of an ester-based solvent are methyl acetate, ethyl acetate, n-propyl acetate, dimethyl acetate, methyl propionate, ethyl propionate, γ-butyrolactone, decanolide, valerolactone, mevalonolactone, and caprolactone. Examples of an ether-based solvent are dibutyl ether, tetraglyme, diglyme, dimethoxyethane, 2-methyl tetrahydrofurane, and tetrahydrofurane. Examples of a ketone-based solvent include cyclohexanone. Examples of an alcohol-based solvent are ethyl alcohol and isopropyl alcohol. Examples of a non-protonic solvent are nitriles represented by R-CN where R is a linear, branched, or cyclic hydrocarbonyl group having 2 to 20 carbon atoms, and R may have a double bond aromatic ring or an ether bond, amides such as dimethyl formamide, dioxolanes such as 1,3-dioxolane, and sulfolanes.

The non-aqueous organic solvents may be used alone or in combination. If the non-aqueous organic solvents are used in combination, a mixed ratio may be appropriately controlled according to performance of a battery to be manufactured and may be obvious to one of ordinary skill in the art.

The lithium salt may be dissolved in an organic solvent and used as a provider for lithium ions in the lithium secondary battery, thereby enabling a basic operation of the lithium secondary battery, and promoting flow of lithium ions between the positive electrode and the negative electrode. The lithium salt may include as a supporting electrolytic salt at least one selected from the group consisting of LiPF₆, LiBF₄, LiSbF₆, LiAsF₆, LiN(SO₂C₂F₅)₂, Li(CF₃SO₂)₂N, LiC₄F₉SO₃, LiClO₄, LiAlO₂, LiAICl₄, LiN(CₓF₂ₓ₊₁SO₂)(CyF_{2y+1}SO₂) where x and y are natural numbers, LiCl, Lil, and LiB(C₂O₄)₂ (lithium bis(oxalato) borate; LiBOB). A concentration of the lithium salt may be in a range of 0.1 to 2.0 M. If the concentration of the lithium salt is within the range described above, the electrolytic solution has appropriate conductivity and viscosity and thus, the electrolytic solution has excellent electrolytic performance and lithium ions may effectively migrate through the electrolytic solution.

According to the type a lithium battery, a separator may be present between the positive electrode and the negative electrode. The separator may be a single or multi-layer of polyethylene, polypropylene, or polyvinyllidene fluoride. Also, the separator may instead be a mixed multi-layer, such as a two-layer separator including polyethylene and polypropylene, a three-layer separator including polyethylene, polypropylene, and polyethylene, or a three-layer separator including polypropylene, polyethylene, polypropylene.

Lithium secondary batteries can be classified as a lithium ion battery, a lithium ion polymer battery, and a lithium polymer battery, according to a separator and an electrolyte; can be classified as a cylindrical battery, a rectangular battery, a coin-type battery, a pouch-type battery, according to the shape of a battery; and can be classified as a bulky battery and a film-type battery, according to the size of a battery. The lithium battery according to an embodiment of the present invention may be used as a primary battery or a secondary battery. Methods of manufacturing the batteries are obvious in the art and thus, will not be described herein.

One or more embodiments will now be described in further detail with reference to the following examples. These examples are for illustrative purposes only and are not intended to limit the scope of the one or more embodiments.

### [Example]

### (Preparation of negative active material composition)

### Preparation Example 1

5 g of polyacrylicacid (PAA) was added to 40 g of water and 10 g of propanol and was then completely dissolved by stirring to prepare a binder solution. 45 g of SiOₓ(0 < x < 1) active material was added to the binder solution to prepare a negative active material slurry composition.

### Preparation Example 2

A negative active material slurry composition was prepared in the same manner as in Preparation Example 1, except that 30 g water of and 20 g of propanol were used.

### Preparation Example 3

A negative active material slurry composition was prepared in the same manner as in Preparation Example 1, except that 45 g of water and 5 g of propanol were used.

### Preparation Example 4

A negative active material slurry composition was prepared in the same manner as in Preparation Example 1, except that 35 g water of and 15 g of propanol were used.

### Preparation Example 5

A negative active material slurry composition was prepared in the same manner as in Preparation Example 1, except that only 50 g of water was used.

### (Preparation of negative electrode plate)

### Example 1

The negative active material slurry composition prepared according to Preparation Example 1 was coated to a thickness of 3.4 g/cm² on a Cu support, and then dried in an oven at a temperature of 110°C for 5 minutes to form a dried film. A thickness of the dried film was 38.8 µm. After the dried film was formed, the resultant structure was pressed to manufacture a negative electrode plate having a thickness of 30 µm and a volumetric density (or mixed density) of 1.13 g/cc, in which a BET specific surface area of a negative active material layer was 0.3888 m²/g.

### Example 2

A negative electrode plate was prepared in the same manner as in Example 1, except that a thickness of a dried film formed using the negative active material composition slurry composition prepared according to Preparation Example 3 was 40 µm and a BET specific surface area of a negative active material layer was 0.5126 m²/g.

### Example 3

A negative electrode plate was prepared in the same manner as in Example 1, except that a thickness of a dried film formed using the negative active material composition slurry composition prepared according to Preparation Example 4 was 37.5 µm and a BET specific surface area of a negative active material layer was 0.3125 m²/g.

### Example 4

A negative electrode plate was prepared in the same manner as in Example 1, except that a thickness of a dried film formed using the negative active material composition slurry composition prepared according to Preparation Example 2 was 39.2 µm and a BET specific surface area of a negative active material layer was 0.4628 m²/g.

### Comparative Example 1

A negative electrode plate was prepared in the same manner as in Example 1, except that a thickness of a dried film formed using the negative active material composition slurry composition prepared according to Preparation Example 5 was 34.8 µm and a BET specific surface area of a negative active material layer was 0.048 m²/g.

### (Electrode Plate Characteristics Evaluation and Lifetime Characteristic Evaluation)

### Evaluation Examples 1: Electrode Plate Characteristics Evaluation

A thickness of a negative electrode dried film coated on an electrode plate before the electrode plate was pressed was obtained as follows. 10 portions of the electrode plate were randomly measured by using a micrometer of Mitsutoyo Inc. and then a thickness of a support was reduced therefrom. A specific surface area of a negative active material layer after the electrode plate was pressed was measured by using Elzone II 5390 manufactured by Micrometrics Instrument according to ISO13319 Particle Size Analysis Electrical Sensing Zone Method. First, 50 mg of the negative electrode support used in each of Examples 1 through 4 and Comparative Example 1 was dried for 24 hours under a nitrogen atmosphere and then a BET value thereof was measured and used as a base-fine. 50 mg of the negative electrode support used in each of Examples 1 through 4 and Comparative Example 1 was used as samples and the same measurement experiment was performed thereon.

A dried film thickness and a BET specific surface area of the negative electrode plates prepared according to Examples 1 to 4 and Comparative Example 1 were measured and the results are shown in Table 1 below.

**[Table 1]**

| | Thickness of Dried Film (µm) | BET (m²/g) |
|---|---|---|
| Example 1 | 38.8 | 0.3888 |
| Example 2 | 40 | 0.5126 |
| Example 3 | 37.5 | 0.3125 |
| Example 4 | 39.2 | 0.4628 |
| Comparative Example 1 | 34.8 | 0.048 |

Referring to Table 1, it was confirmed that when the negative active material slurry compositions were coated to the same thickness of 3.4 g/cm² on a Cu support and then dried to form dried films, the dried film thickness differed according to the added organic solvent content in Examples 1 to 4 and Comparative Example 1.

Also, when the negative electrode plates were pressed such that a thickness thereof was 30 µm and a volumetric density (or mixed density) thereof was 1.13 g/cc after the dried film was formed, a BET specific surface area of a negative active material layer differed according to the added organic solvent content in Examples 1 to 4 and Comparative Example 1.

The results indicate that the negative electrode plates have pores.

### Evaluation Example 2: Lifetime Characteristics Evaluation

Half-cells were manufactured using the negative electrode plates prepared according to Examples 1 through 4 and Comparative Example 1. The half-cells were charged with a constant current (0.02C) at a constant voltage (0.01V, 0.01C cut-off), and then discharged with a constant current (0.02C) until a voltage reached 1.4 V. Then, the half-cells were charged with a constant current (0.5C) at a constant voltage (0.01V, 0.01 C cut-off) and then discharged with a constant current (0.5C) until a voltage reached 1.4 V. This charging and discharging was performed 50 times.

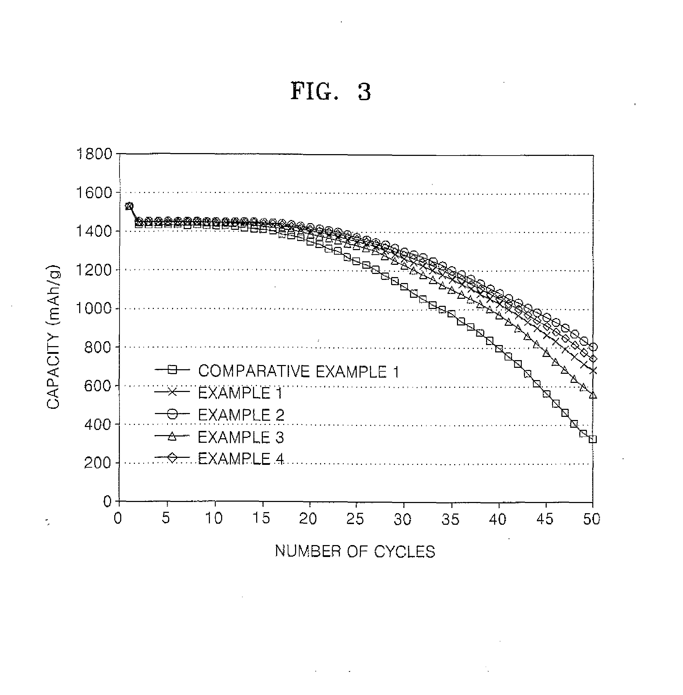

The results are shown in FIG. 3.

If a mixed density was the same, a capacity retention rate of the half-cells of Examples 1 through 4 was higher than that of the half-cell of Comparative Example 1. Thus, it was confirmed that the half-cells of Examples 1 through 4 had better lifetime characteristics than the half-cell of Comparative Example 1.

This is due to the fact that addition of an organic solvent leads to formation of pores in an electrode plate so as to prevent occurrence of a stress in an electrode plate during volumetric expansion of a negative active material.

Embodiments of the invention provide a negative active material composition for a rechargeable lithium battery comprising: a negative active material, a binder and a solvent, wherein the solvent comprises water and an organic solvent. The organic solvent may be miscible with water. The binder may be soluble in water. The binder may be soluble in the organic solvent.

Embodiments of the invention also provide a method of preparing a negative electrode plate, comprising applying a negative active material composition according to one of the above mentioned embodiments to an electrode support, drying the negative active material composition to form a dried film; and pressing the dried film to form a negative electrode plate comprising a negative active material layer. The negative active material composition can be prepared by mixing a negative active material, a binder and a solvent including water and an organic solvent.

Embodiments of the invention also provide a rechargeable lithium battery comprising negative electrode including a negative electrode plate prepared as described above, a positive electrode and an electrolyte.

It should be understood that the embodiments described herein should be considered in a descriptive sense only and not for purposes of limitation. Descriptions of features or aspects within each embodiment should typically be considered as available for other similar features or aspects in other embodiments.

## Claims

1. A negative active material composition for a rechargeable lithium battery comprising:
a negative active material;
a binder;
a solvent, wherein the solvent comprises water and an organic solvent.

2. A negative active material composition according to claim 1, wherein the organic solvent is miscible with water.

3. A negative active material composition according to claim 1 or 2, wherein the binder is soluble in water.

4. A negative active material composition according to any one of claims 1 to 3, wherein the binder is soluble in the organic solvent.

5. A negative active material composition according to any one of claims 1 to 4, wherein the binder is in a range of 2 to 30 wt% based on the total weight of the negative active material composition.

6. A negative active material composition according to any one of claims 1 to5, wherein the solvent is in a range of 30 to 70 wt% based on the total weight of the negative active material composition, optionally in a range of 35 to 50 wt% based on the total weight of the negative active material composition.

7. A negative active material composition according to any one of claims 1 to 6, wherein a weight ratio of the water to the organic solvent is in a range of 9:1 to 1:9, optionally in range of 5:1 to 3:2, further optionally in a range of 4:1 to 3:2.

8. A negative active material composition according to any one of claims 1 to 7, wherein the organic solvent is any one or combination of methanol, ethanol, propanol, isopropanol, acetone, dimethylformamide, dimethylacetamide, chloroform, dichloromethane, trichloroethylene and normalhexane.

9. A negative active material composition according to any one of claims 1 to 8, wherein the binder comprises at least one material selected from the group comprising carboxymethylcellulose, styrene-butadiene rubber, polyacrylicacid, polyvinylalcohol, hydroxypropylenecellulose, diacetylenecellulose..

10. A method of preparing a negative electrode plate, comprising:
applying a negative active material composition according to any one of claims 1 to 9 to an electrode support;
drying the negative active material composition to form a dried film; and
pressing the dried film to form a negative electrode plate comprising a negative active material layer.

11. A method of preparing a negative electrode plate according to claim 10, further comprising:
mixing a negative active material, a binder and a solvent to prepare the negative active material composition.

12. A method of preparing a negative electrode plate according to claim 10 or 11, wherein a thickness of the dried film is in a range of 30 µm to 40 µm, optionally in a range of 32 µm to 40 µm, further optionally in a range of 34 µm to 40 µm.

13. A method of preparing a negative electrode plate according to any one of claims 10 to 12, wherein a mixed density of the negative active material layer is in a range of 1.0 g/cc to 1.5g/cc, optionally in a range of 1.10g/cc to 1.30 g/cc, further optionally in a range of 1.10 g/cc to 1.20 g/cc.

14. A method of preparing a negative electrode plate according to any one of claims 10 to 13, wherein the negative active material layer may has a BET specific surface area of 0.05 m²/g to 0.60 m²/g, optionally from 0.05 m²/g to 0.55 m²/g.

15. A rechargeable lithium battery comprising:
a negative electrode prepared according to any one of claims 10 to 14;
a positive electrode; and
a electrolyte.
